(19) Europäisches Patentamt
European Patent Office
Office européen des brevets

(11) EP 4 249 555 A1

(12) **EUROPEAN PATENT APPLICATION**

(43) Date of publication:
**27.09.2023 Bulletin 2023/39**

(21) Application number: **22164143.4**

(22) Date of filing: **24.03.2022**

(51) International Patent Classification (IPC):
***C08L 23/12*** *(2006.01)* ***C08J 5/18*** *(2006.01)*

(52) Cooperative Patent Classification (CPC):
(C-Sets available)
**C08J 5/18; C08F 210/06; C08L 23/12;**
C08F 110/06; C08J 2323/12; C08J 2323/14;
C08J 2423/12; C08J 2423/14; C08L 2203/16;
C08L 2205/02; C08L 2314/06 (Cont.)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Borealis AG**
**1020 Vienna (AT)**

(72) Inventors:
- **Wang, Jingbo**
  **4021 Linz (AT)**
- **Gahleitner, Markus**
  **4021 Linz (AT)**
- **Bernreitner, Klaus**
  **4021 Linz (AT)**
- **Niedersuess, Peter**
  **4021 Linz (AT)**
- **Ortner, Stefan**
  **4021 Linz (AT)**
- **Fawaz, Joel**
  **4021 Linz (AT)**
- **Friedrich, Karlheinz**
  **2320 Schwechat (AT)**
- **Leskinen, Pauli**
  **06101 Porvoo (FI)**

(74) Representative: **Maiwald GmbH**
**Elisenhof**
**Elisenstraße 3**
**80335 München (DE)**

(54) **POLYPROYPLENE CONTAINING C3C4 FRACTION**

(57) Polypropylene composition containing units derived from 1-butene.

EP 4 249 555 A1

(52) Cooperative Patent Classification (CPC): (Cont.)

C-Sets
**C08F 210/06, C08F 2/001;**
**C08L 23/12, C08L 23/12, C08L 23/142;**
C08F 110/06, C08F 2500/12, C08F 2500/35;
C08F 210/06, C08F 210/08, C08F 2500/12,
C08F 2500/26, C08F 2500/27, C08F 2500/30,
C08F 2500/31, C08F 2500/33, C08F 2500/34,
C08F 2500/35;
C08F 210/06, C08F 210/16, C08F 2500/12,
C08F 2500/26, C08F 2500/27, C08F 2500/30,
C08F 2500/31, C08F 2500/33, C08F 2500/34,
C08F 2500/35

## Description

### Field of the Invention

The present invention relates to a polypropylene composition derived from single site catalysts.

### Background

Packaging films based on polyolefins are well known in the literature. Food packaging in particular places several high demands on the material used. First, the packaging must be sufficiently tight in order to sufficiently protect the packaged or sealed-material, and to make the handling of the sealed products, in particular during transport, sufficiently safe. Thus, good sealing behaviour is desired. Ideally, the films are heat-sealable at as a low temperature as possible to minimise energy input during the sealing process. Another important consideration is mechanical properties. Polymers with higher stiffness may allow for the use of lower film thicknesses, leading to both material and energy savings. Good impact behaviour is also essential so the contents of the packaging remain safely contained, even if dropped. Sterilisation behaviour must also be considered since materials used in food packaging application are now typically subjected to sterilisation before use. The most common sterilisation procedures are the use of heat (steam), radiation (beta radiation, electrons, or gamma radiation) or chemicals (usually ethylene oxide). Steam sterilisation is usually carried out in a temperature range of about 120 to 130°C. Thus, the material should have a sufficient thermal stability. In addition to that, haze, particularly haze when made into a film should be as low as possible since this yields better acceptance by the consumers.

Single site derived propylene butene copolymers and film made therefrom are generally known from Macromolecules 2020, 53, 11, 4407-4421.

WO2020099563A1 concerns a multimodal propylene butene random copolymer having a melt flow rate (MFR2) of 1.0 to 20.0 g/10 min and a butene content of 5.0 to 20.0 wt.-%, wherein said copolymer is prepared using a single site catalyst as well as films made therefrom. Film haze values as low as 0.34 % have been reported when having a total 1-butene content of 6.6 wt.-% and a xylene soluble fraction of 0.86 wt.-% at a moderately high melting temperature of 138°C and low stiffness of 1015 MPa. Thus, there remains the need for a propylene copolymer having even better balance of properties, particularly good haze properties, even better temperature resistance as well as good seal strength as well as film stiffness.

### Summary of the invention

The present invention insofar provides
a polypropylene composition having

(a) a melt flow rate (ISO1133, 230°C, 2.16kg) of 1.0 to 7.0 g/10min, and

(b) a content of units derived from 1-butene of 1.5 to 9.0 wt.-% as determined by FT-IR spectroscopy calibrated by quantitative $^{13}C$-NMR spectroscopy; and

(c) 0.15 to 1.20 mol-% of 2.1 erythro regio-defects determined by $^{13}C$-NMR spectroscopy; and

(d) at least one melting temperature Tm measured by differential scanning calorimetry (DSC) according to ISO 11357-3 meeting the requirement $Tm > 154°C - [2.2 \times \text{content of units derived from 1-butene / wt.-\%}]°C$ whereby the units derived from 1-butene are determined by FT-IR spectroscopy calibrated by quantitative $^{13}C$-NMR spectroscopy when the polypropylene composition is unnucleated
or alternatively
at least one melting temperature Tm measured by differential scanning calorimetry (DSC) according to ISO 11357-3 meeting the requirement $Tm > 156°C - [2.2 \times \text{content of units derived from 1-butene / wt.-\%}]°C$ whereby the units derived from 1-butene are determined by FT-IR spectroscopy calibrated by quantitative $^{13}C$-NMR spectroscopy when the polypropylene composition is nucleated; and

(e) a flexural modulus (FM) determined in 3-point-bending according to ISO 178 on injection molded specimens of $80 \times 10 \times 4$ $mm^3$ prepared in accordance with ISO 294-1:2017 in the range of 1100 to 1600 MPa;

(f) xylene soluble fraction (XCS; ISO 16152) in the range from 2.0 to 4.0 wt.-%, and

(g) optionally a nucleating agent in an amount of 0.0001 to 1.0 wt.-%, based on the total weight of the polypropylene composition.

It is especially preferred that said one melting temperature Tm measured by differential scanning calorimetry (DSC) according to ISO 11357-3 is ranging between 150 to 160 °C. It is more preferred that the melting temperature Tm measured by differential scanning calorimetry (DSC) according to ISO 11357-3 is ranging between 152 to 156 °C.

The amount of 2.1 erythro regio-defects specifies the microstructure of the polypropylene composition. It is well known in the art that Ziegler Natta catalyst derived polypropylene copolymers do not have such microstructure, i.e. the 2.1 erythro regio-defects are essentially zero for Ziegler Natta catalyst derived polypropylene copolymers.

The polypropylene composition according to the present invention is further characterized by an exceptionally high melting temperature for a given 1-butene content. This exceptionally high melting temperature exists for unnucleated and nucleated compositions. Since the nucleating agent and its amount also play a minor role, two different equations apply. The exceptionally high melting temperature indicates high crystallinity. It goes without saying, when the polypropylene composition is composed of two polymers, a propylene homopolymer and a propylene 1-butene copolymer, the melting temperature may be further improved. However, it should be understood that a high melting temperature cannot be achieved by extremes, i.e. using a propylene homopolymer and simultaneously a very high 1-butene copolymer, such as more than 15.0 wt.-% 1-butene, because the 1-butene copolymer containing high amounts of 1-butene would result in a high amount of xylene soluble fraction which is excluded for the present invention.

In a preferred aspect, the polypropylene composition according to the present invention preferably has a haze (measured according to ASTM D1003-00 on a test specimen of 1 mm thickness which is prepared in accordance with ISO 294-1:2017) of below 35%, more preferably below 25% and most preferably below 20%.

It is likewise preferred that polypropylene composition according to the present invention has a film haze (measured on a 50 $\mu$m cast film, according to ASTM D1003-00) of below 2.0%, more preferably of below 1.0%.

A higher content of 1-butene supports lower haze but simultaneously deteriorates melting point.

It is preferred that the polypropylene composition according to the present invention has a content of units derived from 1-butene of 1.5 to 4.0 wt.-% as determined by FT-IR spectroscopy calibrated by quantitative 13C-NMR spectroscopy.

In yet a further preferred aspect, the polypropylene composition as described herein has a flexural modulus determined in 3-point-bending according to ISO 178 on injection molded specimens of 80 $\times$ 10 $\times$ 4 $mm^3$ prepared in accordance with ISO 294-1:2017 of 1100 to 1600 MPa, and particularly from 1250 to 1550 MPa.

Independently therefrom the polypropylene composition is preferably characterized by a sealing initiation temperature (SIT) (as determined by a method described in the experimental part on a 50 $\mu$m cast film) of below 127 °C. Said sealing initiation temperature (SIT) will normally be higher than 90°C.

In yet a further preferred aspect, the polypropylene composition includes

(i) 30 to 70 wt.-% of a propylene homopolymer (A) having a melt flow rate of 1.0 to 10.0 g/10 min; and
(ii) 70 to 30 wt.-% of a propylene butene copolymer (B).

The polypropylene composition according to present invention further preferably has a melt flow rate (ISO1133, 230°C, 2.16kg) of 2.0 to 7.0 g/10min.

In another preferred aspect, the polypropylene composition according to the present invention has a tensile modulus in machine direction (TM-MD) measured according to ISO 527 ranging between 670 to 790 MPa, more preferably between 700 to 770 MPa.

In another preferred aspect, the polypropylene composition according to the present invention has a tensile modulus in transverse direction (TM-TD) measured according to ISO 527 ranging between 650 to 780 MPa, more preferably between 700 to 760 MPa.

In another preferred aspect, the polypropylene composition according to the present invention has seal strength at 135 °C measured according to the method described in description ranging between 9.5 to 16 N, more preferably between 13 to 15 N.

The present invention further concerns a film made from the polypropylene composition as described herein. All aspects as disclosed for the polypropylene composition shall also hold for the film. The film according to the present invention is preferably a cast film.

The polypropylene composition according to the present invention is made by a multistage process.

For the preparation of the polypropylene composition according to the present invention specific catalyst systems should be used. Such catalyst systems are obtainable by a metallocene catalyst complex and a cocatalyst as described in the following.

Preferred complexes of the metallocene catalyst include:

rac-dimethylsilanediylbis[2-methyl-4-(3',5'-dimethylphenyl)-5-methoxy-6-tert-butylinden-1-yl] zirconium dichloride,
rac-anti-dimethylsilanediyl[2-methyl-4-(4'-tert-butylphenyl)-inden-1-yl][2-methyl-4-(4'-tert-butylphenyl)-5-methoxy-6-tert-butylinden-1-yl] zirconium dichloride,
rac-anti-dimethylsilanediyl[2-methyl-4-(4'-tert-butylphenyl)-inden-1-yl][2-methyl-4-phenyl-5-methoxy-6-tert-butylinden-1-yl] zirconium dichloride,
rac-anti-dimethylsilanediyl[2-methyl-4-(3',5'-tert-butylphenyl)-1,5,6,7-tetrahydro-s-indacen-1-yl][2-methyl-4-(3',5'-dimethyl-phenyl)-5-methoxy-6-tert-butylinden-1-yl] zirconium dichloride,
rac-anti-dimethylsilanediyl[2-methyl-4,8-bis-(4'-tert-butylphenyl)-1,5,6,7-tetrahydro-s-indacen-1-yl][2-methyl-4-(3',5'-dimethyl-phenyl)-5-methoxy-6-tert-butylinden-1-yl] zirconium dichloride,
rac-anti-dimethylsilanediyl[2-methyl-4,8-bis-(3',5'-dimethylphenyl)-1,5,6,7-tetrahydro-s indacen-1-yl] [2-methyl-4-(3',5'-dimethylphenyl)-5-methoxy-6-tert-butylinden-1-yl] zirconium dichloride,
rac-anti-dimethylsilanediyl[2-methyl-4,8-bis-(3',5'-dimethylphenyl)-1,5,6,7-tetrahydro-s-indacen-1-yl][2-methyl-4-(3',5'-ditert-butyl-phenyl)-5-methoxy-6-tert-butylinden-1-yl] zirconium dichloride.

Especially preferred is rac-anti-dimethylsilanediyl[2-methyl-4,8-bis-(3',5'-dimethylphenyl)-1,5,6,7-tetrahydro-s indacen-1-yl] [2-methyl-4-(3',5'-dimethylphenyl)-5-methoxy-6-tert-butylinden-1-yl] zirconium dichloride.

Cocatalyst

To form an active catalytic species it is necessary to employ a cocatalyst as is well known in the art. According to the present invention a cocatalyst system comprising a boron containing cocatalyst and an aluminoxane cocatalyst is used in combination with the above defined metallocene catalyst complex.

The aluminoxane cocatalyst can be one of formula (I):

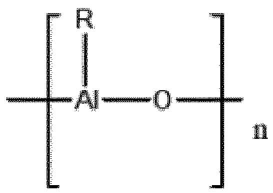

(I)

where n is from 6 to 20 and R has the meaning below.

Aluminoxanes are formed on partial hydrolysis of organoaluminum compounds, for example those of the formula AIR3, AIR2Y and Al2R3Y3 where R can be, for example, C1-C10-alkyl, preferably C1-C5-alkyl, or C3-C10-cycloalkyl, C7-C12-arylalkyl or - alkylaryl and/or phenyl or naphthyl, and where Y can be hydrogen, halogen, preferably chlorine or bromine, or C1-C10-alkoxy, preferably methoxy or ethoxy. The resulting oxygen-containing aluminoxanes are not in general pure compounds but mixtures of oligomers of the formula (I).

The preferred aluminoxane is methylaluminoxane (MAO). Since the aluminoxanes used according to the invention as cocatalysts are not, owing to their mode of preparation, pure compounds, the molarity of aluminoxane solutions hereinafter is based on their aluminium content. Also a boron containing cocatalyst is used in combination with the aluminoxane cocatalyst.

The catalyst complex ideally comprises a co-catalyst, certain boron containing cocatalysts are preferred. Especially preferred borates of use in the invention therefore comprise the trityl, i.e. triphenylcarbenium, ion. Thus the use of Ph3CB(PhF5)4 and analogues therefore are especially favoured.

The catalyst system of the invention is used in supported form. The particulate support material used is silica or a mixed oxide such as silica-alumina, in particular silica. The use of a silica support is preferred. The skilled man is aware of the procedures required to support a metallocene catalyst. In a preferred embodiment, the catalyst system corresponds to the ICS3 of WO 2020/239602 A1.

The polypropylene composition according to the present invention is made by a multistage process. It is highly recommendable to use a combination of loop reactor(s) and gas phase reactor(s). Usually the first reactor will be a loop reactor. It is preferred to use a loop - gas phase reactor 1 - gas phase reactor 2 combination. In a preferred embodiment a polypropylene homopolymer is produced in a first loop and a first gas phase reactor. The homopolymer obtained is then transferred from gas phase reactor 1 to the gas phase reactor 2 and further polymerized in the presence of 1-butene. It is particularly preferential to use a C4 / C3 ratio of 150 mol/kmol in said gas phase reactor 2.

Generally, the quantity of catalyst used will depend upon the nature of the catalyst, the reactor types and conditions and the properties desired for the polymer product. As is well known in the art hydrogen can be used for controlling the molecular weight of the polymer.

The composition according to the present invention preferably includes at least one nucleating agent, more preferably an $\alpha$-nucleating agent. Even more preferred the polypropylene composition according to the present invention is free of $\beta$-nucleating agents. Accordingly, the nucleating agent is preferably selected from the group consisting of

(i) salts of monocarboxylic acids and polycarboxylic acids, e.g. sodium benzoate or aluminum tert-butylbenzoate, and
(ii) dibenzylidenesorbitol (e.g. 1,3 : 2,4 dibenzylidenesorbitol) and $C_1$-$C_8$-alkylsubstituted dibenzylidenesorbitol derivatives, such as methyldibenzylidenesorbitol, ethyldibenzylidenesorbitol or dimethyldibenzylidenesorbitol (e.g. 1,3 : 2,4 di(methylbenzylidene) sorbitol), or substituted nonitol-derivatives, such as 1,2,3,-trideoxy-4,6:5,7-bis-O-[(4-propylphenyl)methylene]-nonitol, and
(iii) salts of diesters of phosphoric acid, e.g. sodium 2,2'-methylenebis (4, 6,-di-tert-butylphenyl) phosphate or aluminium-hydroxy-bis[2,2'-methylene-bis(4,6-di-t-butylphenyl)phosphate], and
(iv) vinylcycloalkane polymer and vinylalkane polymer, and
(v) mixtures thereof.

Preferably, the $\alpha$-nucleating agent is a nucleating agent selected from 1,2-cyclohexane dicarboxylic acid, hydroxybis(2,4,8,10-tetra-tert.butyl-6-hydroxy-12H-dibenzo(d,g)(1,3,2)dioxaphosphocin 6-oxidato)aluminium and mixtures thereof. For example, commercially available $\alpha$-nucleating agents, which can be used for the composition of the invention are, for example, Irgaclear XT 386 from Ciba Speciality Chemicals, Hyperform HPN-68L and Hyperform HPN-20E from Milliken & Company and/or ADK STAB NA-21 nucleating agent.
Hyperform HPN-20E from Milliken & Company has the highest overall preference.

**Detailed description**

In the following specifically preferred embodiments shall be described.
A first particularly preferred embodiment is a
polypropylene composition having

(a) a melt flow rate (ISO1133, 230°C, 2.16kg) of 1.0 to 7.0 g/10min, and
(b) a content of units derived from 1-butene of 1.5 to 4.0 wt.-% as determined by FT-IR spectroscopy calibrated by quantitative $^{13}C$-NMR spectroscopy; and
(c) 0.15 to 1.20 mol-% of 2.1 erythro regio-defects determined by $^{13}C$-NMR spectroscopy; and
(d) at least one melting temperature Tm measured by differential scanning calorimetry (DSC) according to ISO 11357-3 meeting the requirement

Tm > 154°C - [2.2 $\times$ content of units derived from 1-butene / wt.-%]°C
whereby the units derived from 1-butene are determined by FT-IR spectroscopy calibrated by quantitative $^{13}C$-NMR spectroscopy when the polypropylene composition is unnucleated
or alternatively
at least one melting temperature Tm measured by differential scanning calorimetry (DSC) according to ISO 11357-3 meeting the requirement
Tm > 156°C - [2.2 $\times$ content of units derived from 1-butene / wt.-%]°C
whereby the units derived from 1-butene are determined by FT-IR spectroscopy calibrated by quantitative $^{13}C$-NMR spectroscopy when the polypropylene composition is nucleated; and

(e) a flexural modulus (FM) within the range of 1250 to 1550 MPa determined in 3-point-bending according to ISO 178 on injection molded specimens of 80 $\times$ 10 $\times$ 4 $mm^3$ prepared in accordance with ISO 294-1:2017;
(f) xylene cold soluble fraction (XCS; ISO 16152) in the range from 2.0 to 4.0 wt.-%, and
(g) optionally a nucleating agent in an amount of 0.0001 to 1.0 wt.-%, based on the total weight of the polypropylene composition.

All preferred ranges as given above also hold for this embodiment as far as appropriate. This holds particularly for haze, SIT, melting temperature and melt flow rate.
A second particularly preferred embodiment is a film, preferably a cast film, made from a
polypropylene composition having

(h) a melt flow rate (ISO1133, 230°C, 2.16kg) of 1.0 to 7.0 g/10min, and
(i) a content of units derived from 1-butene of 1.5 to 4.0 wt.-% as determined by FT-IR spectroscopy calibrated by quantitative $^{13}C$-NMR spectroscopy; and
(j) 0.15 to 1.20 mol-% of 2.1 erythro regio-defects determined by $^{13}C$-NMR spectroscopy; and
(k) at least one melting temperature Tm measured by differential scanning calorimetry (DSC) according to ISO 11357-3 meeting the requirement

Tm > 154°C - [2.2 × content of units derived from 1-butene / wt.-%]°C
whereby the units derived from 1-butene are determined by FT-IR spectroscopy calibrated by quantitative $^{13}$C-NMR spectroscopy when the polypropylene composition is unnucleated
or alternatively
at least one melting temperature Tm measured by differential scanning calorimetry (DSC) according to ISO 11357-3 meeting the requirement
Tm > 156°C - [2.2 × content of units derived from 1-butene / wt.-%]°C
whereby the units derived from 1-butene are determined by FT-IR spectroscopy calibrated by quantitative $^{13}$C-NMR spectroscopy when the polypropylene composition is nucleated; and

(l) a flexural modulus (FM) in the range of 1100 to 1600 MPa determined in 3-point-bending according to ISO 178 on injection molded specimens of 80 × 10 × 4 mm$^3$ prepared in accordance with ISO 294-1:2017;
(m) xylene cold soluble fraction (XCS; ISO 16152) in the range from 2.0 to 4.0 wt.-%, and
(n) optionally a nucleating agent in an amount of 0.0001 to 1.0 wt.-%, based on the total weight of the polypropylene composition.

This film is further characterized by the fact that the composition has a haze measured according to ASTM D1003-00 on a test specimen of 1 mm thickness which is prepared in accordance with ISO 294-1:2017 as below 35%, more preferably below 25% and most preferably below 20%, and that the film has a haze of below 2.0%, more preferably of below 1.0%measured on a thickness of 50 μm, according to ASTM D1003-00.

## Experimental Part

### a) Measurement methods

#### aa) Melt Flow Rate

The melt flow rate ($MFR_2$) was determined according to ISO 1133 and is indicated in g/10min. The $MFR_2$ of heterophasic propylene copolymer is determined at a temperature of 230 °C and under a load of 2.16 kg.

#### ab) Quantification of microstructure (regio-defects) by NMR spectroscopy

Quantitative nuclear-magnetic resonance (NMR) spectroscopy was used to quantify the polypropylene copolymer.
Quantitative $^{13}C\{^1H\}$ NMR spectra were recorded in the solution-state using a Bruker Advance III 400 NMR spectrometer operating at 400.15 and 100.62 MHz for 1H and 13C respectively. All spectra were recorded using a $^{13}$C optimised 10 mm extended temperature probehead at 125 °C using nitrogen gas for all pneumatics. Approximately 200 mg of material was dissolved in 1,2-tetrachloroethane-d2 (TCE-d2). To ensure a homogenous solution, after initial sample preparation in a heat block, the NMR tube was further heated in a rotatary oven for at least 1 hour. Upon insertion into the magnet, the tube was spun at 10 Hz. This setup was chosen primarily for the high resolution needed for tacticity distribution quantification (Busico, V., Cipullo, R., Prog. Polym. Sci. 26 (2001) 443; Busico, V.; Cipullo, R., Monaco, G., Vacatello, M., Segre, A.L., Macromolecules 30 (1997) 6251). Standard single-pulse excitation was employed utilising the NOE and bi-level WALTZ16 decoupling scheme (Zhou, Z., Kuemmerle, R., Qiu, X., Redwine, D., Cong, R., Taha, A., Baugh, D. Winniford, B., J. Mag. Reson. 187 (2007) 225; Busico, V., Carbonniere, P., Cipullo, R., Pellecchia, R., Severn, J., Talarico, G., Macromol. Rapid Commun. 2007, 28, 11289). A total of 8192 (8k) transients were acquired per spectrum.
Quantitative $^{13}C\{^1H\}$ NMR spectra were processed, integrated and relevant quantitative properties determined from the integrals using proprietary computer programs.
For propylene homopolymers all chemical shifts are internally referenced to the methyl isotactic pentad (mmmm) at 21.85 ppm.
Characteristic signals corresponding to regio defects (Resconi, L., Cavallo, L., Fait, A., Piemontesi, F., Chem. Rev. 2000, 100, 1253;; Wang, W-J., Zhu, S., Macromolecules 33 (2000), 1157; Cheng, H. N., Macromolecules 17 (1984), 1950) or comonomer were observed.
The presence of 2,1 erythro regio-defects was indicated by the presence of the two methyl sites at 17.7 and 17.2 ppm and confirmed by other characteristic sites. Characteristic signals corresponding to other types of regio-defects were not observed (Resconi, L., Cavallo, L., Fait, A., Piemontesi, F., Chem. Rev. 2000, 100, 1253).
The amount of 2,1 erythro regio-defects was quantified using the average integral of the two characteristic methyl sites at 17.7 and 17.2 ppm:

$$P_{21e} = (I_{e6} + I_{e8}) / 2$$

The amount of 1,2 primary inserted propene was quantified based on the methyl region with correction undertaken for sites included in this region not related to primary insertion and for primary insertion sites excluded from this region:

$$P_{12} = I_{CH3} + P_{21e}$$

The total amount of propene was quantified as the sum of primary inserted propene and all other present regio-defects:

$$P_{total} = P_{12} + P_{21e}$$

The mole percent of 2,1 erythro regio-defects was quantified with respect to all propene:

$$[21e] \text{ mol-\%} = 100 * (P21e / Ptotal)$$

**ac) Xylene cold soluble fraction (XCS)**

"Xylene Cold Soluble" (XCS) fraction and "Xylene Cold Insoluble" (XCI) fraction, respectively, is determined according to standard gravimetric method as per ISO 16152.

**ad) Comonomer content of 1-butene for a propylene 1-butene copolymer (P)**

Quantitative $^{13}C\{^1H\}$ NMR spectra recorded in the molten-state using a Bruker Avance III 500 NMR spectrometer operating at 500.13 and 125.76 MHz for $^1H$ and $^{13}C$ respectively. All spectra were recorded using a $^{13}C$ optimised 7 mm magic-angle spinning (MAS) probehead at 180°C using nitrogen gas for all pneumatics. Approximately 200 mg of material was packed into a 7 mm outer diameter zirconia MAS rotor and spun at 4 kHz. This setup was chosen primarily for the high sensitivity needed for rapid identification and accurate quantification. (Klimke, K., Parkinson, M., Piel, C., Kaminsky, W., Spiess, H.W., Wilhelm, M., Macromol. Chem. Phys. 2006;207:382., Parkinson, M., Klimke, K., Spiess, H.W., Wilhelm, M., Macromol. Chem. Phys. 2007;208:2128., Castignolles, P., Graf, R., Parkinson, M., Wilhelm, M., Gaborieau, M., Polymer 50 (2009) 2373). Standard single-pulse excitation was employed utilising the NOE at short recycle delays of 3s (Klimke, K., Parkinson, M., Piel, C., Kaminsky, W., Spiess, H.W., Wilhelm, M., Macromol. Chem. Phys. 2006;207:382., Pollard, M., Klimke, K., Graf, R., Spiess, H.W., Wilhelm, M., Sperber, O., Piel, C., Kaminsky, W., Macromolecules 2004;37:813.). and the RS-HEPT decoupling scheme (Filip, X., Tripon, C., Filip, C., J. Mag. Resn. 2005, 176, 239., Griffin, J.M., Tripon, C., Samoson, A., Filip, C., and Brown, S.P., Mag. Res. in Chem. 2007 45, S1, S198). A total of 16384 (16k) transients were acquired per spectra.

Quantitative $^{13}C\{^1H\}$ NMR spectra were processed, integrated and relevant quantitative properties determined from the integrals. All chemical shifts are internally referenced to the methyl isotactic pentad (*mmmm*) at 21.85 ppm.

Basic Comonomer Content Method Spectral Analysis Method Characteristic signals corresponding to the incorporation of 1-butene were observed and the comonomer content quantified in the following way.

The amount 1-butene incorporated in PPBPP isolated sequences was quantified using the integral of the αB2 sites at 43.6 ppm accounting for the number of reporting sites per comonomer:

$$B = I_{\alpha}/2$$

The amount of 1-butene incorporated in PPBBPP double consecutively sequences was quantified using the integral of the ααB2B2 site at 40.5 ppm accounting for the number of reporting sites per comonomer:

$$BB = 2 * I_{\alpha\alpha}$$

When double consecutive incorporation was observed the amount of 1-butene incorporated in PPBPP isolated

sequences needed to be compensated due to the overlap of the signals αB2 and αB2B2 at 43.9 ppm:

$$B=(I_{\alpha}-2*I_{\alpha\alpha})/2$$

The total 1-butene content was calculated based on the sum of isolated and consecutively incorporated 1-butene:

$$B_{total}=B+BB$$

The amount of propene was quantified based on the main Sαα methylene sites at 46.7 ppm and compensating for the relative amount of αB2 and αB2B2 methylene unit of propene not accounted for (note B and BB count number of butane monomers per sequence not the number of sequences):

$$P_{total}=I_{S\alpha\alpha}+B+BB/2$$

The total mole fraction of 1-butene in the polymer was then calculated as:

$$f_B=(B_{total}/(B_{total}+P_{total})$$

The full integral equation for the mole fraction of 1-butene in the polymer was:

$$f_B=(((I_{\alpha}-2*I_{\alpha\alpha})/2)+(2*I_{\alpha\alpha}))/I_{S\alpha\alpha}+((I_{\alpha}-2*I_{\alpha\alpha})/2)+((2*I_{\alpha\alpha})/2))+((I_{\alpha}-2*I_{\alpha\alpha})/2)+(2*I_{\alpha\alpha}))$$

This simplifies to:

$$f_B=(I\alpha/2+I\alpha\alpha)/(I_{S\alpha\alpha}+I\alpha+I_{\alpha\alpha})$$

The total comonomer incorporation of 1-butene in mole percent was calculated from the mole fraction in the usual manner:

$$B[\text{mol-\%}]=100*f_B$$

The total comonomer incorporation of 1-butene in weight percent was calculated from the mole fraction in the standard manner:

$$B[\text{wt.-\%}]=100*(f_B*56.11)/((f_B*56.11)+((1-f_B)*42.08))$$

**ae) Quantification of microstructure by NMR spectroscopy - Ethylene content in C2C3 RACO**

Quantitative nuclear-magnetic resonance (NMR) spectroscopy was used to quantify the comonomer content of the polymers. Quantitative $^{13}C\{^{1}H\}$ NMR spectra were recorded in the solution-state using a Bruker Advance III 400 NMR spectrometer operating at 400.15 and 100.62 MHz for $^{1}H$ and $^{13}C$ respectively. All spectra were recorded using a $^{13}C$ optimised 10 mm extended temperature probehead at 125°C using nitrogen gas for all pneumatics. Approximately 200 mg of material was dissolved in 3 ml of *1,2*-tetrachloroethane-$d_2$ (TCE-$d_2$) along with chromium-(III)-acetylacetonate ($Cr(acac)_3$) resulting in a 65 mM solution of relaxation agent in solvent (Singh, G., Kothari, A., Gupta, V., Polymer Testing 28 5 (2009), 475). To ensure a homogenous solution, after initial sample preparation in a heat block, the NMR tube was further heated in a rotatory oven for at least 1 hour. Upon insertion into the magnet the tube was spun at 10 Hz. This setup was chosen primarily for the high resolution and quantitatively needed for accurate ethylene content quantification. Standard single-pulse excitation was employed without NOE, using an optimised tip angle, 1 s recycle delay and a bi-level WALTZ16 decoupling scheme (Zhou, Z., Kuemmerle, R., Qiu, X., Redwine, D., Cong, R., Taha, A., Baugh, D.

Winniford, B., J. Mag. Reson. 187 (2007) 225; Busico, V., Carbonniere, P., Cipullo, R., Pellecchia, R., Severn, J., Talarico, G., Macromol. Rapid Commun. 2007, 28, 1128). A total of 6144 (6k) transients were acquired per spectra.

Quantitative $^{13}C\{^1H\}$ NMR spectra were processed, integrated and relevant quantitative properties determined from the integrals using proprietary computer programs. All chemical shifts were indirectly referenced to the central methylene group of the ethylene block (EEE) at 30.00 ppm using the chemical shift of the solvent. This approach allowed comparable referencing even when this structural unit was not present. Characteristic signals corresponding to the incorporation of ethylene were observed Cheng, H. N., Macromolecules 17 (1984), 1950).

With characteristic signals corresponding to 2,1 erythro regio defects observed (as described in L. Resconi, L. Cavallo, A. Fait, F. Piemontesi, Chem. Rev. 2000, 100 (4), 1253, in Cheng, H. N., Macromolecules 1984, 17, 1950, and in W-J. Wang and S. Zhu, Macromolecules 2000, 33 1157) the correction for the influence of the regio defects on determined properties was required. Characteristic signals corresponding to other types of regio defects were not observed.

The comonomer fraction was quantified using the method of Wang et. al. (Wang, W-J., Zhu, S., Macromolecules 33 (2000), 1157) through integration of multiple signals across the whole spectral region in the $^{13}C\{^1H\}$ spectra. This method was chosen for its robust nature and ability to account for the presence of regio-defects when needed. Integral regions were slightly adjusted to increase applicability across the whole range of encountered comonomer contents.

For systems where only isolated ethylene in PPEPP sequences was observed the method of Wang et. al. was modified to reduce the influence of non-zero integrals of sites that are known to not be present. This approach reduced the overestimation of ethylene content for such systems and was achieved by reduction of the number of sites used to determine the absolute ethylene content to:

$$E = 0.5(S_{\beta\beta} + S_{\beta\gamma} + S_{\beta\delta} + 0.5(S_{\alpha\beta} + S_{\alpha\gamma}))$$

Through the use of this set of sites the corresponding integral equation becomes:

$$E = 0.5(I_H + I_G + 0.5(I_C + I_D))$$

using the same notation used in the article of Wang et. al. (Wang, W-J., Zhu, S., Macromolecules 33 (2000), 1157). Equations used for absolute propylene content were not modified.

The mole percent comonomer incorporation was calculated from the mole fraction:

$$E\ [mol\text{-}\%] = 100 * f_E$$

The weight percent comonomer incorporation was calculated from the mole fraction:

$$E\ [wt.\text{-}\%] = 100 * (f_E * 28.06) / ((f_E * 28.06) + ((1-f_E) * 42.08))$$

The comonomer sequence distribution at the triad level was determined using the analysis method of Kakugo et al. (Kakugo, M., Naito, Y., Mizunuma, K., Miyatake, T. Macromolecules 15 (1982) 1150). This method was chosen for its robust nature and integration regions slightly adjusted to increase applicability to a wider range of comonomer contents.

**af) Melting temperature $T_m$ and crystallization temperature $T_c$**

The melting temperature $T_m$ was determined by differential scanning calorimetry (DSC) according to ISO 11357-3 with a TA-Instruments 2920 Dual-Cell with RSC refrigeration apparatus and data station. A heating and cooling rate of 10 °C/min was applied in a heat/cool/heat cycle between +23 and +210 °C. The crystallization temperature ($T_c$) was determined from the cooling step, while melting temperature ($T_m$) and melting enthalpy ($H_m$) are being determined in the second heating step.

**ag) Flexural Modulus**

The flexural modulus was determined in 3-point-bending at 23 °C according to ISO 178 on 80×10×4 $mm^3$ test bars injection molded in line with ISO 294-1:2017.

**ah) Tensile Modulus**

Tensile modulus was measured according to ISO 527 at a temperature of 23°C on 10 mm wide strips cut in machine direction (MD) and in transverse direction (TD) from cast films of 50 μm thickness produced on a monolayer cast film line with a melt temperature of 220°C and a chill roll temperature of 20°C.

**ai) Haze**

Haze on plaques is determined according to ASTM D1003-00 on 60×60×1 $mm^3$ plaques injection molded in line with ISO 294-1:2017.
Haze on film is determined according to ASTM D1003-00 on cast films of 50 μm thickness produced on a monolayer cast film line with a melt temperature of 220°C and a chill roll temperature of 20°C.

**aj) Notched impact strength (NIS)**

The Charpy notched impact strength (NIS) was measured according to ISO 179 1 eA at -20 °C, 0 °C and +23 °C, using injection molded bar test specimens of 80×10×4 $mm^3$ prepared in accordance with ISO 294-1:2017.

**ak) Sealing Initial Temperature (SIT)**

The method determines the sealing temperature range (sealing range) of polypropylene films, in particular blown films or cast films according to ASTM F1921 - 12. Seal pressure, cool time and peel speed are modified as stated below. The sealing temperature range is the temperature range, in which the films can be sealed according to conditions given below.
The lower limit (heat sealing initiation temperature (SIT)) is the sealing temperature at which a sealing strength of > 5 N is achieved. The upper limit (sealing end temperature (SET)) is reached, when the films stick to the sealing device.
The sealing range is determined on a J&B Universal Sealing Machine Type 3000 with a blown film of 50 pm thickness with the following further parameters:

Specimen width: 25.4 mm
Seal Pressure: 0.1 $N/mm^2$
Seal Time: 0.1 sec
Cool time: 99 sec
Peel Speed: 10 mm/sec
Start temperature: 50°C
End temperature: 150°C
Increments: 10°C
specimen is sealed A to A at each sealbar temperature and seal strength (force) is determined at each step.

The temperature is determined at which the seal strength reaches 5 N.

**ak) Seal strength**

The heat-seal experiments were performed on at least 3 film specimens of 85 mm wide by 200 mm length cut in the machine direction. The 5 mm × 150 mm Teflon coated steel heating bars were set to a temperature of 110°C. Two films were sealed by positioning, one on top of the other using a 0.5 s sealing time and 0.67 N/ $mm^2$ pressure. The resulting sealed area was 85 mm × 5 mm. The specimens were then conditioned for 7 days (± 24 h) at 23 °C (± 2 °C) / 50 % RH (± 10%). 10 specimens of 15 mm width were cut and tested in tensile mode at 23 °C (± 2 °C) / 50 % RH (± 10%) on a Universal Testing Machine (Zwick Z005). The clamping distance used was 100 mm, and a test speed of 200 mm/min. The yielding force and maximum force were measured for each test specimen.
Basic sealing:

- Film width: 85 mm
- Film length: > 200 mm
- Sealed seam width: 5 mm
- Sealing temperature: 110 °C
- Sealing pressure: 0,67 $N/mm^2$
- Sealing time: 0,5 s

- Sealing jaws: Teflon coated

Conditioning

- Conditioning time: 7 days (± 24 h) at 23 °C (± 2 °C) / 50 % RH (± 10%)

Heat seal strength:

- Test temperature: 23 °C (± 2 °C) / 50 % RH (± 10%)
- Specimen width: 15 mm
- Gripping distance: 100 mm
- Test speed: 200 mm/min
- Test device: Universal Testing Machine

**b) Experiments** - **Preparation of the heterophasic propylene copolymers**

**ba) Preparation of the catalyst system**

**Catalyst synthesis**

The metallocene (MC) used was Anti-dimethylsilanediyl[2-methyl-4,8-di(3,5-dimethylphenyl)-1,5,6,7-tetrahydro-s-indacen-1-yl][2-methyl-4-(3,5-dimethylphenyl)-5-methoxy-6-tert-butylinden-1-yl] zirconium dichloride as disclosed in WO2020/239602.

**Preparation of MAO-silica support** (as described in WO2020/239602 at page 57)

A steel reactor equipped with a mechanical stirrer and a filter net was flushed with nitrogen and the reactor temperature was set to 20 °C. Next silica grade DM-L-303 from AGC Si-Tech Co, pre-calcined at 600 °C (5.0 kg) was added from a feeding drum followed by careful pressuring and depressurising with nitrogen using manual valves. Then toluene (22 kg) was added. The mixture was stirred for 15 min. Next 30 wt% solution of MAO in toluene (9.0 kg) from Lanxess was added via feed line on the top of the reactor within 70 min. The reaction mixture was then heated up to 90°C and stirred at 90°C for additional two hours. The slurry was allowed to settle and the mother liquor was filtered off. The catalyst was washed twice with toluene (22 kg) at 90°C, following by settling and filtration.

The reactor was cooled off to 60°C and the solid was washed with heptane (22.2 kg). Finally MAO treated SiO2 was dried at 60° under nitrogen flow for 2 hours and then for 5 hours under vacuum (-0.5 barg) with stirring. MAO treated support was collected as a free-flowing white powder found to contain 12.2% Al by weight. **Catalyst preparation** (as described in WO2020/239602 as ICS3) 30 wt% MAO in toluene (0.7 kg) was added into a steel nitrogen blanked reactor via a burette at 20 °C. Toluene (5.4 kg) was then added under stirring. The MC as cited above (93 g) was added from a metal cylinder followed by flushing with 1 kg toluene. The mixture 5 was stirred for 60 minutes at 20 °C . Trityl tetrakis(pentafluorophenyl) borate (91 g) was then added from a metal cylinder followed by a flush with 1 kg of toluene. The mixture was stirred for 1 h at room temperature. The resulting solution was added to a a stirred cake of MAO-silica support prepared as described above over 1 hour. The cake was allowed to stay for 12 hours, followed by drying under N2 flow at 60°C for 2h and additionally for 5 h 10 under vacuum (-0.5 barg) under stirring. Dried catalyst was sampled in the form of pink free flowing powder containing 13.9% Al by weight and 0.11% Zr by weight.

**bc) Preparation of inventive polymer and comparative polymer**

**Table 1:** Polymerization conditions for IE1 and CE1

| | | IE1 | CE1 |
|---|---|---|---|
| **Catalyst system** | | 1 | 1 |
| **Prepolymerization** | | | |
| Temperature | [°C] | 20 | 20 |
| H2/C3 ratio | [mol/kmoll] | 0.07 | 0.07 |

(continued)

| | | IE1 | CE1 |
|---|---|---|---|
| Residence time | [h] | 0.30 | 0.30 |
| **Loop (Reactor 1)** | | | |
| Temperature | [°C] | 75 | 75 |
| Pressure | [kPa] | 5320 | 5330 |
| H2/C3 ratio | [mol/kmol] | 0.14 | 0.14 |
| Residence time | [h] | 0.38 | 0.37 |
| Loop reactor split | [wt.-%] | 40 | 39 |
| $MFR_2$ | [g/10 min] | 2.42 | 1.65 |
| **GPR1 (Reactor 2)** | | | |
| Temperature | [°C] | 80 | 80 |
| Pressure | [kPa] | 2100 | 2200 |
| H2/C3 ratio | [mol/kmol] | 0.75 | 0.99 |
| Residence time | [h] | 1.52 | 1.87 |
| GPR1 reactor split | [wt.-%] | 38 | 50 |
| XCS after GPR1 | [wt.-%] | 0.20 | 0.30 |
| $MFR_2$ | [g/10 min] | 3.0 | 1.83 |
| **GPR2 (Reactor 3)** | | | |
| Temperature | [°C] | 70 | 70 |
| Pressure | [kPa] | 2400 | 2500 |
| H2/C4 ratio | [mol/kmol] | 2.40 | n.d. |
| C4/C3 ratio | [mol/kmol] | 150 | 0 |
| H2/C2 ratio | [mol/kmol] | n.d. | 1.96 |
| C2/C3 ratio | [mol/kmol] | 0 | 867 |
| Residence time | [h] | 1.65 | 1.20 |
| GPR2 reactor split | [wt.-%] | 22 | 11 |
| XCS after GPR2 | [wt.-%] | 14.0 | 3.0 |
| $MFR_2$ total | [g/10 min] | 5.0 | 1.5 |
| 2.1 regio-defects | [mol-%] | 0.62 | 0.70 |
| C4 total | [wt.-%] | 2.6 | 0 |
| C2 total | [wt.-%] | 0 | 3.2 |
| C2 (XCS) | [wt.-%] | 0 | 24.2 |

The product from the final reactor was compounded and pelletized in the presence of a conventional additive package including antioxidant (Irganox B215, BASF AG, Germany; 0.15 wt.-%) and acid scavenger (synthetic hydrotalcite, CAS-No. 11097-59-9, available from Kisuma Chemicals under the trade name DHT-4A). In the case of IE2, Calcium cis-1,2-cyclohexanedicarboxylate (CAS-No. 491589-22-1, commercially available as Hyperform® HPN-20E as available from Milliken) was added as $\alpha$-nucleating agent to the polymer of inventive example IE1

Results are shown in Table 2.

Table 2

| | | IE2 | IE1 | CE1 | CE2* |
|---|---|---|---|---|---|
| Polypropylene copolymer | [wt.-%] | 99.7 | 99.8 | 99.8 | 99.8 |
| Irganox B215 | [wt.-%] | 0.15 | 0.15 | 0.15 | 0.15 |
| DHT-4A | [wt.-%] | 0.05 | 0.05 | 0.05 | 0.05 |
| HPN-20E | [wt.-%] | 0.1 | - | - | - |
| | | | | | |
| $MFR_2$ | [g/10 min] | 5.0 | 5.0 | 1.5 | 9.0 |
| C4 total | [wt.-%] | 2.6 | 2.6 | 0 | 6.6 |
| C2 total | [wt.-%] | 0 | 0 | 3.2 | 0 |
| Tc | [°C] | 124 | 120 | 119 | 102 |
| Tm | [°C] | 156 | 155 | 156 | 138 |
| Required Tm @ C4 total content Tm > 154°C - [2.2×C4 (1/wt.-%)] for unnucleated | [°C] | | 148 | n.d. | 141 |
| Required Tm @ C4 total content Tm > 156°C - [2.2×C4 (1/wt.-%)] for nucleated | [°C] | 153 | | n.d. | n.d. |
| Tm requirement fulfilled? | | yes | yes | - | No |
| Hm | [J/g] | 93 | 95 | 85 | 76 |
| amount of polypropylene homopolymer (from reactor split) | [wt.-%] | 78 | 78 | 89 | 0 |
| Haze (1 mm test specimen according to ISO 294-1:2017) | [%] | 16.1 | 33.4 | 60.0 | 42.0 |
| Flex. modulus | [MPa] | 1473 | 1345 | 1066 | 1015 |
| NIS +23°C | [kJ/m$^2$] | 4.6 | 4.8 | 4.8 | 4.6 |
| XCS | [wt.-%] | 3.0 | 3.0 | 14.0 | 0.86 |
| | | | | | |
| *Cast film 50 μm* | | | | | |
| Haze | [%] | 0.57 | 0.82 | 4.2 | 0.34 |
| SIT | [°C] | 125 | 126 | 129 | 112 |
| Tens.mod. MD | [MPa] | 767 | 744 | 664 | 616 |
| Tens.mod. TD | [MPa] | 748 | 727 | 594 | 594 |
| Seal strength@135°C | [N] | 14. 7 | 14.4 | 12.5 | 9.1 |
| *WO 2020099563 A1, Ex.1 | | | | | |

Films were produced on a Collin 30 lab scale cast film line with a melt temperature of 220°C and chill roll temperature of 20°C. Throughput was 8 kg/h. The film thickness was 50 μm.

It can be seen that example IE1 and IE2 had significantly higher stiffness, higher melting temperature, at still acceptable haze and acceptable SIT increase. Seal strength was also good, while XCS remained at a low level.

## Claims

**1.** A polypropylene composition having

(a) a melt flow rate (ISO1133, 230°C, 2.16kg) of 1.0 to 7.0 g/10min, and
(b) a content of units derived from 1-butene of 1.5 to 9.0 wt.-% as determined by FT-IR spectroscopy calibrated

by quantitative $^{13}C$-NMR spectroscopy; and

(c) 0.15 to 1.20 mol-% of 2.1 erythro regio-defects determined by $^{13}C$-NMR spectroscopy; and

(d) at least one melting temperature Tm measured by differential scanning calorimetry (DSC) according to ISO 11357-3 meeting the requirement Tm > 154 °C - [2.2 × content of units derived from 1-butene / wt.-%]°C whereby the units derived from 1-butene are determined by FT-IR spectroscopy calibrated by quantitative $^{13}C$-NMR spectroscopy when the polypropylene composition is unnucleated

or alternatively

at least one melting temperature Tm measured by differential scanning calorimetry (DSC) according to ISO 11357-3 meeting the requirement Tm > 156 °C - [2.2 × content of units derived from 1-butene / wt.-%]°C whereby the units derived from 1-butene are determined by FT-IR spectroscopy calibrated by quantitative $^{13}C$-NMR spectroscopy when the polypropylene composition is nucleated; and

(e) a flexural modulus (FM) in the range of 1100 to 1600 MPa determined in 3-point-bending according to ISO 178 on injection molded specimens of 80 × 10 × 4 $mm^3$ prepared in accordance with ISO 294-1:2017;

(f) xylene cold soluble fraction (XCS; ISO 16152) in the range from 2.0 to 4.0 wt.-%, and

(g) optionally a nucleating agent in an amount of 0.0001 to 1.0 wt.-%, based on the total weight of the polypropylene composition.

**2.** The polypropylene composition according to claim 1 having a haze according to ASTM D1003-00 ranging between 15% to 35%, measured on a test specimen of 1 mm which is prepared in accordance with ISO 294-1:2017 and/or a haze ranging between 0.4% to 2.0%, measured on a cast film of 50 μm thickness according to ASTM D1003-00.

**3.** The polypropylene composition according to claim 1 or 2 having a content of units derived from 1-butene of 1.5 to 4.0 wt.-% as determined by FT-IR spectroscopy calibrated by quantitative $^{13}C$-NMR spectroscopy.

**4.** The polypropylene composition according to any one of the preceding claims having a flexural modulus determined in 3-point-bending according to ISO 178 on injection molded specimens of 80 × 10 × 4 $mm^3$ prepared in accordance with ISO 294-1:2017 of 1250 to 1550 MPa.

**5.** The polypropylene composition according to any one of the preceding claims having a sealing initiation temperature (SIT), as determined by a method described in the experimental part on a 50 μm cast film, ranging between 90 to 127°C.

**6.** The polypropylene composition according to any one of the preceding claims having at least one melting temperature Tm measured by differential scanning calorimetry (DSC) according to ISO 11357-3 in the range of 150 to 160°C.

**7.** The polypropylene composition according to any one of the preceding claims including

(i) 30 to 70 wt.-% of a propylene homopolymer (A) having a melt flow rate of 1.0 to 10.0 g/10 min (ISO1133, 230°C, 2.16kg); and

(ii) 70 to 30 wt.-% of a propylene butene copolymer (B).

**8.** The polypropylene composition according to any one of the preceding claims having a melt flow rate (ISO1133, 230°C, 2.16kg) of 2.0 to 7.0 g/10min.

**9.** The polypropylene composition according to any of the preceding claims having a tensile modulus in machine direction (TM-MD) measured according to ISO 527 ranging between 670 to 790 MPa, more preferably between 700 to 770 MPa.

**10.** The polypropylene composition according to any of the preceding claims having a tensile modulus in transverse direction (TM-TD) measured according to ISO 527 ranging between 650 to 780 MPa, more preferably between 700 to 760 MPa.

**11.** The polypropylene composition according to any of the preceding claims having seal strength at 135 °C measured according to the method described in description ranging between 9.5 to 16 N, more preferably between 13 to 15 N.

**12.** The polypropylene composition according to any one of the preceding claims having

(a) a melt flow rate (ISO1133, 230°C, 2.16kg) of 1.0 to 7.0 g/10min, and

(b) a content of units derived from 1-butene of 1.5 to 4.0 wt.-% as determined by FT-IR spectroscopy calibrated by quantitative $^{13}$C-NMR spectroscopy; and

(c) 0.15 to 1.20 mol-% of 2.1 erythro regio-defects determined by $^{13}$C-NMR spectroscopy; and

(d) at least one melting temperature Tm measured by differential scanning calorimetry (DSC) according to ISO 11357-3 meeting the requirement Tm > 154 °C - [2.2 $\times$ content of units derived from 1-butene / wt.-%]°C whereby the units derived from 1-butene are determined by FT-IR spectroscopy calibrated by quantitative $^{13}$C-NMR spectroscopy when the polypropylene composition is unnucleated

or alternatively

at least one melting temperature Tm measured by differential scanning calorimetry (DSC) according to ISO 11357-3 meeting the requirement Tm > 156 °C - [2.2 $\times$ content of units derived from 1-butene / wt.-%]°C whereby the units derived from 1-butene are determined by FT-IR spectroscopy calibrated by quantitative $^{13}$C-NMR spectroscopy when the polypropylene composition is nucleated; and

(e) a flexural modulus (FM) within the range of 1250 to 1550 MPa determined in 3-point-bending according to ISO 178 on injection molded specimens of 80 $\times$ 10 $\times$ 4 mm$^3$ prepared in accordance with ISO 294-1:2017; and

(f) xylene cold soluble fraction (XCS; ISO 16152) in the range from 2.0 to 4.0 wt.-%, and

(g) optionally a nucleating agent in an amount of 0.0001 to 1.0 wt.-%, based on the total weight of the polypropylene.

**13.** Film made from a polyproyplene composition as defined in any of claims 1 to 12.

**14.** The film according to claim 13 wherein the film is a cast film.

Europäisches Patentamt
European Patent Office
Office européen des brevets

# EUROPEAN SEARCH REPORT

Application Number
EP 22 16 4143

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2020/099563 A1 (BOREALIS AG [AT]) 22 May 2020 (2020-05-22) * claims 1,3,8,13; examples * ----- | 1-14 | INV. C08L23/12 C08J5/18 |
| A | WO 2018/122263 A1 (BOREALIS AG [AT]) 5 July 2018 (2018-07-05) * claims; examples * ----- | 1-14 | |
| A | WO 2014/154610 A1 (BOREALIS AG [AT]) 2 October 2014 (2014-10-02) * the whole document * ----- | 1-14 | |

TECHNICAL FIELDS SEARCHED (IPC)
C08L
C08J

The present search report has been drawn up for all claims

1

| Place of search | Date of completion of the search | Examiner |
|---|---|---|
| Munich | 9 August 2022 | Iraegui Retolaza, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO.

EP 22 16 4143

This annex lists the patent family members relating to the patent documents cited in the above-mentioned European search report. The members are as contained in the European Patent Office EDP file on
The European Patent Office is in no way liable for these particulars which are merely given for the purpose of information.

09-08-2022

| Patent document cited in search report | Publication date | Patent family member(s) | Publication date |
|---|---|---|---|
| WO 2020099563 A1 | 22-05-2020 | BR 112021009027 A2 | 10-08-2021 |
| | | CN 113227173 A | 06-08-2021 |
| | | EP 3880722 A1 | 22-09-2021 |
| | | US 2021395427 A1 | 23-12-2021 |
| | | WO 2020099563 A1 | 22-05-2020 |
| WO 2018122263 A1 | 05-07-2018 | BR 112019009301 A2 | 30-07-2019 |
| | | CA 3048326 A1 | 05-07-2018 |
| | | CN 110099933 A | 06-08-2019 |
| | | EP 3562849 A1 | 06-11-2019 |
| | | KR 20190078649 A | 04-07-2019 |
| | | TW 201825543 A | 16-07-2018 |
| | | US 2019367642 A1 | 05-12-2019 |
| | | WO 2018122263 A1 | 05-07-2018 |
| WO 2014154610 A1 | 02-10-2014 | AU 2014243188 A1 | 20-08-2015 |
| | | CN 105143286 A | 09-12-2015 |
| | | EP 2978782 A1 | 03-02-2016 |
| | | ES 2651839 T3 | 30-01-2018 |
| | | KR 20150126682 A | 12-11-2015 |
| | | US 2016060371 A1 | 03-03-2016 |
| | | WO 2014154610 A1 | 02-10-2014 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2020099563 A1
- WO 2020239602 A1
- WO 2020239602 A

### Non-patent literature cited in the description


- *Macromolecules,* 2020, vol. 53 (11), 4407-4421
- **BUSICO, V. ; CIPULLO, R.** *Prog. Polym. Sci.,* 2001, vol. 26, 443
- **BUSICO, V. ; CIPULLO, R. ; MONACO, G. ; VACATELLO, M. ; SEGRE, A.L.** *Macromolecules,* 1997, vol. 30, 6251
- **ZHOU, Z. ; KUEMMERLE, R. ; QIU, X. ; REDWINE, D. ; CONG, R. ; TAHA, A. ; BAUGH, D. ; WINNIFORD, B.** *J. Mag. Reson.,* 2007, vol. 187, 225
- **BUSICO, V. ; CARBONNIERE, P. ; CIPULLO, R. ; PELLECCHIA, R. ; SEVERN, J. ; TALARICO, G.** *Macromol. Rapid Commun.,* 2007, vol. 28, 11289
- **RESCONI, L. ; CAVALLO, L. ; FAIT, A. ; PIEMONTESI, F.** *Chem. Rev.,* 2000, vol. 100, 1253
- **WANG, W-J. ; ZHU, S.** *Macromolecules,* 2000, vol. 33, 1157
- **CHENG, H. N.** *Macromolecules,* 1984, vol. 17, 1950
- **KLIMKE, K. ; PARKINSON, M. ; PIEL, C. ; KAMINSKY, W. ; SPIESS, H.W. ; WILHELM, M.** *Macromol. Chem. Phys.,* 2006, vol. 207, 382
- **PARKINSON, M. ; KLIMKE, K. ; SPIESS, H.W. ; WILHELM, M.** *Macromol. Chem. Phys.,* 2007, vol. 208, 2128
- **CASTIGNOLLES, P. ; GRAF, R. ; PARKINSON, M. ; WILHELM, M. ; GABORIEAU, M.** *Polymer,* 2009, vol. 50, 2373
- **POLLARD, M. ; KLIMKE, K. ; GRAF, R. ; SPIESS, H.W. ; WILHELM, M. ; SPERBER, O. ; PIEL, C. ; KAMINSKY, W.** *Macromolecules,* 2004, vol. 37, 813
- **FILIP, X. ; TRIPON, C. ; FILIP, C.** *J. Mag. Resn.,* 2005, vol. 176, 239
- **GRIFFIN, J.M. ; TRIPON, C. ; SAMOSON, A. ; FILIP, C. ; BROWN, S.P.** *Mag. Res. in Chem.,* 2007, vol. 45 (S1), S198
- **SINGH, G. ; KOTHARI, A. ; GUPTA, V.** *Polymer Testing,* 2009, vol. 28 (5), 475
- **BUSICO, V. ; CARBONNIERE, P. ; CIPULLO, R. ; PELLECCHIA, R. ; SEVERN, J. ; TALARICO, G.** *Macromol. Rapid Commun.,* 2007, vol. 28, 1128
- **L. RESCONI ; L. CAVALLO ; A. FAIT ; F. PIEMONTESI.** *Chem. Rev.,* 2000, vol. 100 (4), 1253
- **W-J. WANG ; S. ZHU.** *Macromolecules,* 2000, vol. 33, 1157
- **KAKUGO, M. ; NAITO, Y. ; MIZUNUMA, K. ; MIYATAKE, T.** *Macromolecules,* 1982, vol. 15, 1150
- *CHEMICAL ABSTRACTS,* 11097-59-9
- *CHEMICAL ABSTRACTS,* 491589-22-1